Europäisches Patentamt

(19) European Patent Office

Office européen des brevets

(11) Publication number: **0 192 894**
**A2**

## (12) EUROPEAN PATENT APPLICATION

(21) Application number: **85309327.6**

(22) Date of filing: **20.12.85**

(51) Int. Cl.⁴: **H 04 Q 3/545**
**H 04 M 11/00, H 04 Q 3/02**

(30) Priority: **31.01.85 IT 6708785**

(43) Date of publication of application:
**03.09.86 Bulletin 86/36**

(84) Designated Contracting States:
**CH DE FR GB LI NL**

(71) Applicant: **Ing. C. Olivetti & C., S.p.a.**
**Via G. Jervis 77**
**I-10015 Ivrea(IT)**

(72) Inventor: **Maccari, Antonio**
**via Bonanno 109**
**I-56100 Pisa(IT)**

(74) Representative: **Pears, David Ashley et al,**
**REDDIE & GROSE 16 Theobalds Road**
**London WC1X 8PL(GB)**

(54) Integrated office automation system.

(57) Integration is effected between a personal computer (5) having a central processing unit (6) and a local telephone network (24) comprising a switching exchange (28) for selective connection of exchange lines (23) and internal lines (21). The exchange (28) is controlled by the central unit (6) of the computer (5) which also comprises input and output means including a keyboard (11), a display unit (14, 16) and a recording unit (17, 18) such as a disk unit. The input and output means can be connected to the various modules of the exchange network (24) for a series of services of this network. Modules of the telephone network can be disposed on a card received in a slot in the chassis of the computer so as to connect the network to a system bus (7) of the computer.

./...

FIG.1

## INTEGRATED OFFICE AUTOMATION SYSTEM

The present invention relates to an integrated office automation system as defined in the preamble of claim 1.

Local telephone networks are known, in which all the services of the exchange are controlled by digital logic units, comprising a central unit, for example a microprocessor. In those arrangements however the telephone network is totally independent of the data processing installations or the local data transmission network, if provided, so that the equipment for a modern office is always very expensive.

The object of the present invention is to provide an integrated circuit as between a telephone network and data processing equipment so as drastically to reduce the cost thereof.

This object is not by the system according to the invention, which is defined by the characterising portion of claim 1.

The invention will be described in more detail, by way of example, with reference to the accompanying drawings, in which:

Figure 1 is a block diagram of a system embodying the invention, and

Figure 2 is a diagrammatic view of a telephone exchange for the system shown in Figure 1.

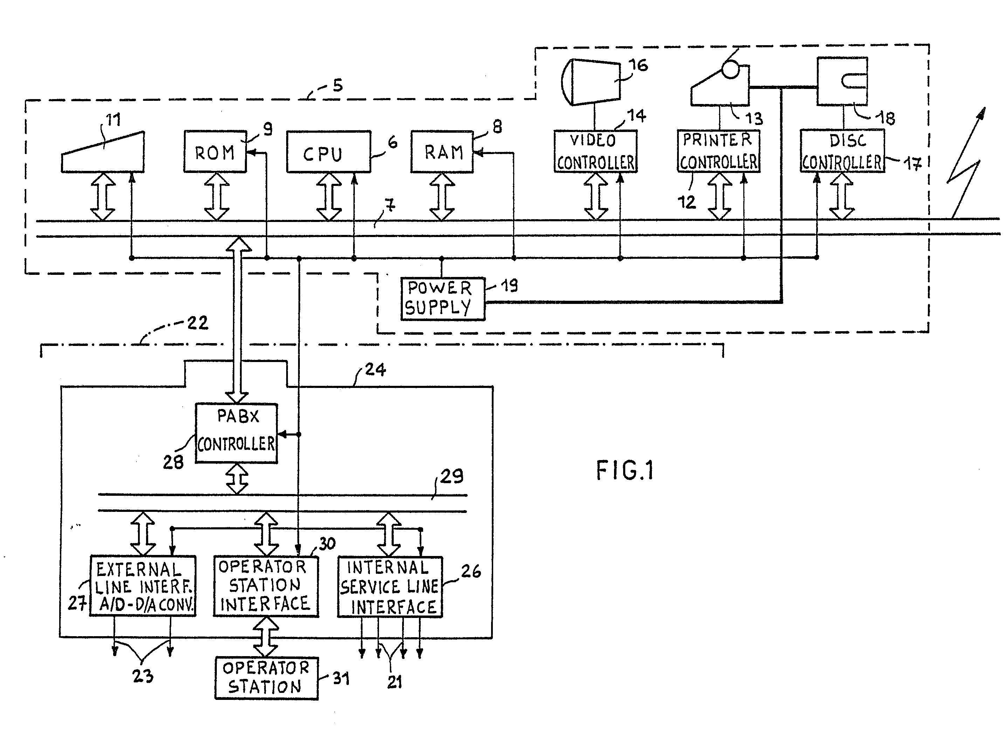

Referring to Figure 1, a computer 5, for example a personal computer, comprises a central processing unit 6 formed by one or more microprocessors which are connected to a system bus 7 for data and instructions.

Connected to the bus 7 are a read-write memory RAM 8, a read only memory ROM 9 for the firmware and the tables of fixed data of the computer, and a keyboard 11 for data input. Also connected to the bus 7 are the controllers of a series of peripherals comprising a controller 12 for a print unit 13 and a video controller 14 for a video page unit 16, for example of the CRT type. Finally, connected to the bus 7 is a controller 17 for a magnetic disk-type data recording and reading unit 18. The computer finally comprises a voltages supply device 19, both for the logic signals and for actuation of the individual peripherals.

The office automation system comprises a private telephone network formed by a series of internal user telephone units which are connected by way of a series of user lines 21, for example sixteen thereof, to a telephone exchange, commonly known as a PABX, generally indicated by reference numeral 22. That is in turn connected to a group of lines 23, being for example four thereof, of the external public network.

According to the invention, the computer 5 is arranged to receive an electronic board 24 bearing the control and interface modules of the exchange 22. In particular the board 24 can be removably fitted into a seat provided on the fixed frame of the computer 5, in such a way as to be connected to the bus 7 of the computer. The board 24 essentially comprises an interface module 26 for connection of the lines 21 of the internal users and the services of the exchange 22, an interface module 27 for connection of the lines 23 of the external network and for conversion of the analog signals therein into digital signals for the exchange and vice-versa, and a control unit 28 which can be connected to the bus 7. The unit 28 communicates with the modules 26 and 27 by way of an internal digital bus 29 to which there is also connected an interface module 30 for a control unit 31 of the operator station of the exchange.

The general arrangement as described hereinbefore makes it possible to integrate a personal computer 5 with a telephone exchange 22 in such a way that the control unit 28 can be considered by the central unit 6 of the computer as a common peripheral having maximum priority for access to the central unit 6. The two apparatuses 5 and 22 will thus have in common the CPU with the associated registers and the memories RAM and ROM, whereby all the functions of recording telephone calls, tariff counting, display of the state of the individual users and answering service may be carried out by the computer. In turn the keyboard 11 of the computer may be integrated with the keys of the specific functions of the operator station 31 while for the numerical telephone selector keys, it is possible to use the same numerical keys of the keyboard 11.

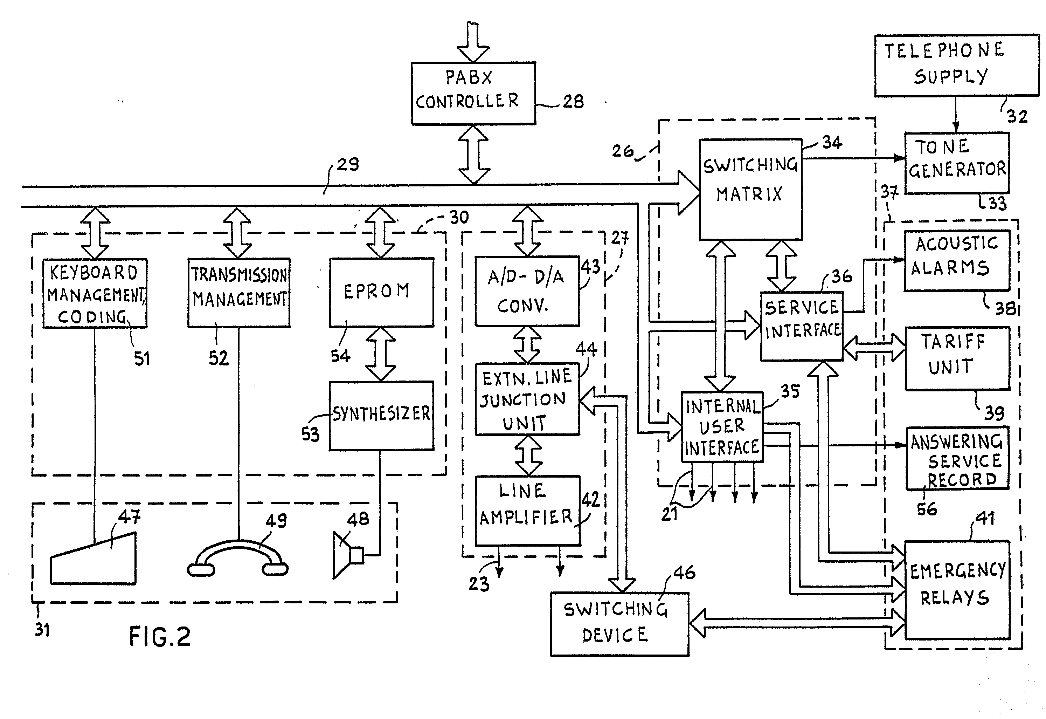

More particularly, the exchange 22 comprises a supply device 32 (see Figure 2) for generating the telephone supply voltages and the telephone call current and for feeding a tone generator 33 for the acoustic signals in respect of connections. The module 26 comprises a switching matrix 34 connected to an internal user interface unit 35 and an interface unit 36 for a group of services 37 such as acoustic alarms 38, a bank of tariff devices 39 for the outside lines and the emergency relays 41 for switching the external junctions to one or more internal users in the event of an emergency due to partial malfunctioning of the exchange 22.

The module 27 comprises a line amplifier 42 connected to an A/D, D/A converter 43 which in turn is connected to a junction unit 44 for the external lines 23. The unit 44 is connected to a switching device 46 for the internal and external lines. The supply device 32, the service units 37 and the switching device 46 are contained in a separate housing from the computer 5, for

4

example a wall cabinet.

The operator station unit 31 comprises an operator keyboard 47, a loudspeaker 48 and a headset 49. The interface unit 30 comprises a unit 51 for management and coding of the keyboard 47, a unit 52 for management of transmission and reception and a voice synthesiser 53 which is connected to the loudspeaker 48 and which can be controlled by a series of voice messages recorded in an EPROM 54 to permit blind persons to operate the operator station 31, substantially as described in Italian patent application No 67207-A/84 to the present applicants.

The control unit 28 is operable to permit access of the data present on the internal bus 29 to the bus 7 (Figure 1) of the computer and thus to the CPU 6, the memories 8 and 9 and the various peripherals. The CPU 6 can thus control all the operations of the matrix 34 (see Figure 2), the interfaces 35 and 36, the units 42, 43 and 44 and the units 51, 52 and 54 whereby all the functions of the exchange are pilot-controlled by the CPU 6. It also permits calculation of the tariffs and selective despatch of the data for transmission, reception and tariffing of the connections made to the peripherals 13, 16, 18 (see Figure 1) whereby such data can be memorised in the unit 18, displayed at the unit 16 and possibly printed at the unit 13.

In addition the control unit 28 is operable to connect to the interface unit 34 (see Figure 2) a sound recorder 56 which acts as an answering service in the event of one or more internal users being absent or engaged. The sound recorder 58 may possibly be integrated with the magnetic disk unit 18. The keyboard 11 (Figure 1) may also be used to control, by way of the central unit 6, the search for communications or the tariff values recorded on the disk unit 18, for statistical or survey purposes.

5

It will be appreciated that the computer 5 may be connected on line by means of a suitable interface and possibly a modem to other computers or terminals of a local data transmission network, which may be represented by the same internal user lines 21, whereby the local data transmission network and the local telephone communication network are perfectly integrated.

It will be clear that the above-described system may be the subject of various modifications and improvements without departing from the scope of the invention. For example the computer 5 may be replaced by any multifunctional working station for office use, provided with a central unit, keyboard, an output device and a mass memory.

CLAIMS

1.    An integrated office automation system comprising a computer (5) having a central unit (6) and data input and output means (11, 12, 14, 17), and a local telephone network (24) comprising a plurality of telephone units (21) and a switching exchange (28) for the selective connection of the telephone units, characterised in that the switching exchange (28) is controlled by the computer central unit (6), and in that the input and output means (11, 12, 14, 17) can be connected to the switching exchange for a series of services of the telephone network (24).

2.    A system according to claim 1, characterised in that  the chassis of the computer (5) has a slot for receiving an electronic board for carrying a series of modules of the switching exchange (24), for connecting the latter to a data bus (7) of the computer (5).

3.    A system according to claim 2, characterised in that the computer (5) is of personal type, and the input and output means comprise a keyboard (11), a display means (14, 16) and a data recording and reading unit (17, 18).

4.    A system according to claim 3, characterised in that the recording and reading unit (17, 18) comprises a magnetic disk unit capable of being conditioned by the central unit (6) to record the data of the telephone connections made and to operate as an answering service.

5.    A system according to claim 3 or 4, characterised in that the keyboard (11) is operable to control the central unit (6) in such a way as to seek out the recorded data on the disk unit (17, 18), process the data and present the data at the display means (14, 16).

6.    A system according to claim 5, characterised in that the keyboard (11) comprises a series of function keys of the exchange for switching the external telephone calls to the telephone units and for making telephone calls to the outside.

7.    A system according to any of the preceding claims, characterised in that the computer (5) is connected to operate on line on a local data transmission network which is integrated with said local telephone network.

8.    A system according to claim 7, characterised in that the local telephone network (24) comprises an operator station (31) for blind persons, in which a voice synthesiser (53) is operable to generate sounds corresponding to the numbers and commands of the exchange, and the central unit (6) is capable of enabling the synthesiser (53) to generate sounds corresponding to the input or output data by way of the input and output means (11, 12, 14, 17).

FIG.1

0192894

FIG.2